Europäisches Patentamt

(19) European Patent Office

Office européen des brevets

(11) Numéro de publication: **0 049 644**
**A1**

(12) # DEMANDE DE BREVET EUROPEEN

(21) Numéro de dépôt: **81400033.7**

(22) Date de dépôt: **12.01.81**

(51) Int. Cl.³: **G 01 V 1/30**
**G 01 N 29/00, G 01 S 15/02**

(30) Priorité: **02.10.80 FR 8021179**

(43) Date de publication de la demande:
**14.04.82 Bulletin 82/15**

(84) Etats contractants désignés:
**AT BE CH DE GB IT LI LU NL SE**

(71) Demandeur: **BUREAU DE RECHERCHES**
**GEOLOGIQUES ET MINIERES**
**6-8, rue Chasseloup-Laubat**
**F-75737 Paris Cedex 15(FR)**

(72) Inventeur: **Horn, Robert**
**180, rue des Capucines**
**F-45160 Olivet(FR)**

(72) Inventeur: **Dhaoui, Amor**
**9 Avenue Buenos-Aires**
**Cité Bouchoucha Le Bardo(TN)**

(72) Inventeur: **Wackherr, Pierre 2 allée Promenée des**
**Terrasses**
**Résidence Jeanne Hachette**
**F-94200 Ivry sur Seine(FR)**

(74) Mandataire: **Phélip, Bruno et al,**
**c/o Cabinet Harlé & Phélip 21, rue de La Rochefoucauld**
**F-75009 Paris(FR)**

(54) **Appareil automatique de détermination continue de coefficients de réflexion à partir d'un signal sismique.**

(57) L'invention concerne la détermination du coefficient de réflexion de couches sédimentaires.

Elle se rapporte à un appareil dans lequel un circuit détecteur 32 alimente deux circuits de mesure 34 et 36 qui sont validés par une commande 38 afin que le premier 34 reçoive une première partie du signal sismique et le second 36 une seconde partie du signal sismique. La position dans le temps et la durée des périodes de validation des circuits de mesure 34 et 36 peuvent être réglées à volonté, afin que, à la sortie du circuit 44 de calcul, le signal soit représentatif du coefficient voulu de réflexion.

Application aux opérations de prospection sismique en mer.

FIG.2

1.

" Appareil automatique de détermination continue
de coefficients de réflexion à partir
d'un signal sismique "

La présente invention concerne un appareil
automatique de détermination continue du coefficient de
réflexion d'une ou plusieurs interfaces, à partir d'un
signal sismique et en temps réel.

Le présent mémoire décrit l'application de
l'appareil selon l'invention à la détermination continue du coefficient de réflexion de couches sédimentaires du plateau continental, c'est-à-dire de sédiments
dont la profondeur est au maximum de quelques centaines
de mètres. Cependant, l'invention convient aux autres
applications sismiques avec éventuellement une adaptation des paramètres à l'application particulière (éventuellement modification des fréquences d'émission,
etc.), bien connue des hommes du métier.

Le calcul d'un coefficient de réflexion à
partir de données relevées sur des traces sismiques est
connu depuis longtemps. Les deux méthodes principales
de calcul de ce coefficient sont d'une part la méthode
de comparaison, et d'autre part la méthode des multiples. Selon la première méthode, la pression acoustique
d'une onde directe est comparée à une pression acoustique d'un écho renvoyé par une interface, après correction de l'atténuation de cette pression acoustique d'écho provoquée par le plus long parcours de cette onde
réfléchie. Selon la méthode des multiples, une compa-

2.

raison analogue est effectuée entre une onde qui a subi une seule réflexion à l'interface considérée et une onde qui a subi plusieurs réflexions à cette même interface.

La connaissance du coefficient de réflexion aux interfaces présente un grand intérêt en prospection sismique car ce coefficient de réflexion est représentatif de nombreuses propriétés des sédiments. Par exemple, on sait que le coefficient de réflexion dépend notamment de la vitesse de propagation du son dans les sédiments, de la densité de ceux-ci, de leur porosité et de la dimension des grains dans les sédiments. Des études poussées en laboratoire ont permis ainsi la mise en évidence de relations entre ces divers paramètres et l'impédance acoustique qui détermine la valeur du coefficient de réflexion.

Il est donc important de noter que la variation du coefficient de réflexion indique une variation d'au moins un paramètre physique.

Il n'existe pas actuellement d'appareil permettant la détermination continue du coefficient de réflexion d'une ou plusieurs interfaces à partir d'un signal sismique. Pour cette raison, le coefficient de réflexion n'a qu'une importance réduite pour l'interprétation des résultats des campagnes sismiques.

L'invention concerne un appareil automatique de détermination continue du coefficient de réflexion d'une ou plusieurs interfaces à partir d'un signal sismique et en temps réel. En conséquence, l'appareil permet la mise à disposition, en temps réel, de données directement reliées aux paramètres physiques des couches sédimentaires étudiées si bien que les variations du coefficient de réflexion déterminé peuvent être immédiatement utilisées pour la modification du déroulement de la campagne de prospection.

Plus précisément, lors de l'étude des fonds

0049644

3.

marins à faible profondeur, exécutée par exemple en prévision de travaux de pose de câbles ou de construction d'installations portuaires, un navire de prospection sismique relève des traces sismiques, avec éventuellement des données bathymétriques, et il prélève des carottes. L'analyse des traces sismiques est effectuée par des moyens informatiques puissants, après la campagne, et les résultats sont corrélés à ceux des analyses des carottes. Une telle méthode de prospection nécessite le prélèvement d'un grand nombre de carottes dont l'analyse exige ensuite une main d'oeuvre abondante. En fonction des résultats évalués ensuite, il n'est pas rare qu'une seconde campagne de prospection soit nécessaire afin que la connaissance de différentes parties de la structure des différentes couches soit affinée, notamment dans les zones de transition.

Dans une campagne de prospection entreprise avec l'appareil selon l'invention, les coefficients de réflexion des différentes couches sédimentaires intéressantes sont déterminés en continu et en temps réel. Comme la variation du coefficient de réflexion est reliée à une variation d'au moins un paramètre physique et comme inversement l'absence de variation du coefficient de réflexion implique le plus souvent une absence de variation des paramètres physiques correspondants, le nombre de carottes prélevées peut être fortement réduit. En effet, les carottes peuvent n'être prélevées que lorsqu'une variation du coefficient de réflexion indique une variation réelle des paramètres physiques des couches sédimentaires. Bien entendu, le prélèvement de quelques carottes supplémentaires, à titre de confirmation, est souhaitable, mais le nombre de carottes prélevées au total au cours d'une campagne peut être réduit considérablement. A la fin de la campagne, après le dépouillement des traces sismiques, une nouvelle campagne de confirmation n'est pratiquement jamais nécessaire car les varia-

tions du coefficient de réflexion ont permis directement la détermination des zones de transition de structure. Les résultats ont donc pu être affinés dès la première campagne, dans les zones intéressantes. En outre, le nombre de carottes prélevées est considérablement réduit si bien que la main d'oeuvre nécessaire pour l'analyse est réduite.

On note donc que l'appareil de détermination continue et en temps réel du coefficient de réflexion de couches sédimentaires permet une réduction considérable des coûts de prospection sismique, et notamment des coûts d'immobilisation de matériel très coûteux tel que les navires sismiques.

L'appareil selon l'invention assure l'isolement des parties d'un signal sismique qui sont représentatives des paramètres qui permettent le calcul du coefficient de réflexion. L'amplitude de chacune des parties isolées est alors déterminée et permet la détermination d'un coefficient de réflexion. Les parties du signal sismique utilisées pour la détermination de ce coefficient dépendent de la méthode de calcul (méthode de comparaison ou méthode des multiples). L'appareil permet la sélection des parties convenables et le réglage de la durée pendant laquelle l'amplitude du signal est évaluée. Dans une variante, certains circuits de l'appareil sont dupliqués afin que l'appareil permette simultanément la détermination du coefficient de réflexion de plusieurs interfaces.

Plus précisément, l'invention concerne un appareil automatique de détermination continue et en temps réel du coefficient de réflexion d'une ou plusieurs interfaces à partir d'un signal sismique comprenant au moins deux parties représentatives d'ondes sismiques dont l'une au moins a subi au moins une réflexion à une interface, cet appareil comprenant :

- un circuit détecteur destiné à recevoir le

5.

signal sismique et à créer un signal de détection lorsqu'il détermine l'arrivée d'une première partie de signal sismique représentative d'une onde sismique,

 - un circuit de comptage commandé par le signal de détection et destiné à former un signal de fin de comptage après un intervalle de temps prédéterminé,

 - un circuit de validation de mesure commandé successivement par le signal de détection puis par le signal de comptage et destiné, à chaque fois, à créer un signal de validation de durée déterminée, inférieure audit intervalle de temps prédéterminé,

 - un circuit de mesure commandé par le signal de validation et destiné à former des signaux de mesure représentatifs chacun de l'amplitude maximale du signal reçu pendant la durée du signal correspondant de validation, et

 - un circuit de calcul destiné à recevoir les signaux de mesure et à les traiter afin qu'il détermine une valeur représentative d'un coefficient de réflexion.

Selon une caractéristique avantageuse de l'invention, le circuit de comptage comporte en outre un dispositif de réglage de l'intervalle de temps prédéterminé, séparant les mesures des deux parties différentes du signal sismique.

Il est aussi avantageux que le circuit de validation de mesure comporte en outre un dispositif de réglage de la durée déterminée du signal de validation, c'est-à-dire du temps pendant lequel l'amplitude maximale du signal sismique peut être déterminée.

Il est en outre avantageux que l'appareil comporte un circuit de commande d'échantillonnage, lui-même commandé par un signal extérieur de synchronisation, par exemple lors de l'émission d'une onde sismique, ce circuit étant destiné à valider le fonctionnement du circuit détecteur seulement après le passage de parties inutiles du signal sismique.

6.

Le circuit détecteur est avantageusement sous forme d'un comparateur qui ne crée le signal de détection que lorsqu'il détermine que le signal sismique dépasse un seuil prédéterminé.

Le circuit de mesure comporte avantageusement deux circuits détecteurs de pic commandés l'un par un premier signal de validation et l'autre par un second signal de validation, avec éventuellement un dispositif à mémoire destiné à conserver les valeurs déterminées.

En outre, l'appareil comporte avantageusement un circuit d'affichage des valeurs représentatives des coefficients de réflexion. Ce circuit d'affichage peut cependant être extérieur. Il peut s'agir d'un affichage numérique, d'une impression, etc.

Lorsque le calcul est effectué suivant la méthode de comparaison, la première partie du signal sismique correspond à une onde sismique directe alors que la seconde partie correspond à une onde réfléchie une seule fois par une interface.

Lorsque le circuit de calcul met en oeuvre la méthode des multiples, la première partie du signal sismique est représentative d'une onde sismique qui a subi une seule réflexion sur une interface alors que la seconde partie du signal sismique est représentative d'une onde ayant subi des réflexions multiples, deux de préférence.

Il est aussi avantageux que l'appareil comporte plusieurs circuits de comptage, plusieurs circuits de validation de mesure et plusieurs circuits de mesure, permettant la détermination par l'appareil de plusieurs coefficients de réflexion qui correspondent soit à plusieurs interfaces, soit à une même interface dont le coefficient est calculé suivant différentes méthodes.

D'autres caractéristiques et avantages de l'invention ressortiront mieux de la description qui va suivre, faite en référence aux dessins annexés sur lesquels :

- la figure 1 est un exemple de trace sismique, correspondant à un signal sismique du type reçu par l'appareil selon l'invention;

- la figure 2 est un diagramme synoptique d'un mode de réalisation d'appareil selon l'invention;

- la figure 3 est un schéma électrique, en partie sous forme synoptique, d'une première partie de l'appareil de la figure 2;

- la figure 4 est un diagramme synoptique détaillé d'une seconde partie de l'appareil de la figure 2; et

- les figures 5 et 6 sont des diagrammes des temps représentant des formes d'onde observées dans l'appareil selon l'invention, dans deux modes de fonctionnement correspondant à des méthodes différentes de calcul du coefficient de réflexion.

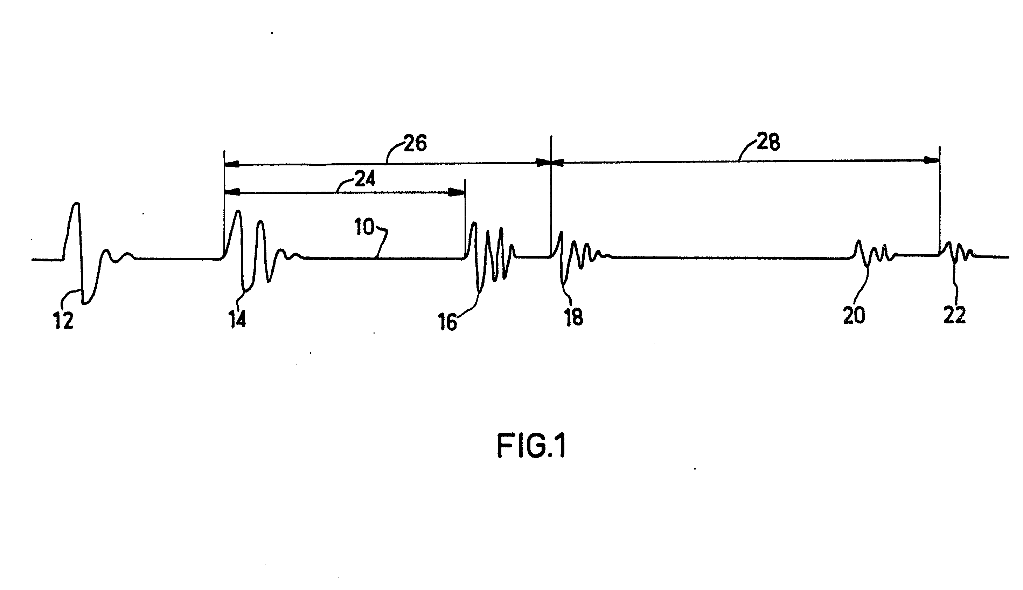

La figure 1 représente une trace sismique représentative d'un signal sismique du type reçu par l'appareil selon l'invention. La trace 10 comporte d'abord une partie 12 représentative du signal d'émission. La partie 14 est représentative de l'onde qui est reçue directement par le récepteur, par exemple à hydrophone, c'est-à-dire sans aucune réflexion sur le fond mais par simple propagation dans l'eau. La partie 16 du signal est représentative de l'onde réfléchie à une première interface, appelée "miroir" dans la technique. La partie 18 est représentative de la même onde réfléchie une seule fois par une seconde interface (second miroir). La référence 20 désigne la partie correspondant au premier multiple de l'onde réfléchie, c'est-à-dire à une onde qui a été réfléchie plusieurs fois sur le premier miroir, alors que la partie 22 représente le premier multiple correspondant au second miroir.

Les grandeurs nécessaires à la détermination du coefficient de réflexion diffèrent selon la méthode

8.

utilisée pour le calcul.

Dans la méthode de comparaison, les parties du signal sismique intéressantes sont les parties 14 et 16. Les amplitudes maximales de ces deux parties sont déterminées par l'appareil. Un autre paramètre est cependant nécessaire, c'est le temps 24 qui sépare ces deux parties 14 et 16. En effet, ce temps correspond à la propagation de la seule onde sismique qui provoque la formation de la partie 16 du signal sismique dans l'eau qui atténue le signal. L'appareil doit donc comparer l'amplitude de la partie 14 à l'amplitude de la partie 16 corrigée afin que l'atténuation due à la propagation dans l'eau pendant le temps 24 soit compensée. La mesure du coefficient de réflexion du second miroir est effectuée de la même manière à partir des amplitudes des parties 14 et 18 du signal sismique, après compensation qui est fonction de la durée 26 séparant les deux parties correspondantes du signal sismique.

Dans la méthode des multiples, les parties du signal sismique qui sont comparées sont les parties 16 et 20 pour le premier miroir et les parties 18 et 22 pour le second miroir, c'est-à-dire la partie qui correspond à l'onde sismique réfléchie une fois sur le fond et la partie qui correspond à l'onde sismique réfléchie deux fois sur le fond. Là encore, la seconde partie utilisée pour le calcul doit être compensée de l'atténuation provoquée par la propagation dans l'eau pendant le temps supplémentaire (repéré par la référence 28 pour le second miroir).

On considère maintenant plus en détail l'appareil selon l'invention, destiné au traitement des traces sismiques du type représenté sur la figure 1.

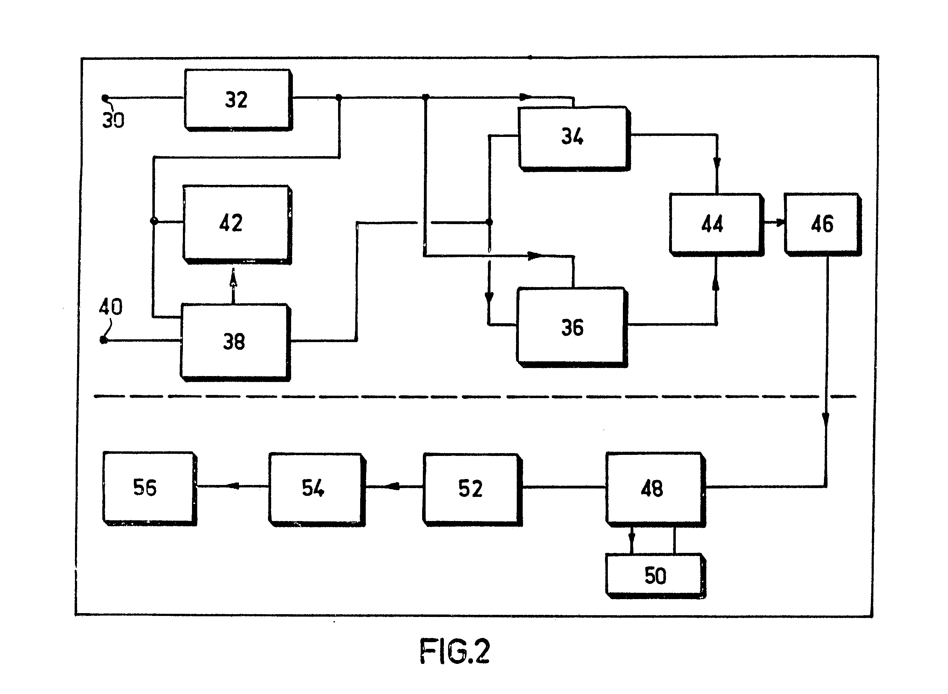

La figure 2 est un diagramme synoptique d'un mode de réalisation avantageux d'appareil selon l'invention.

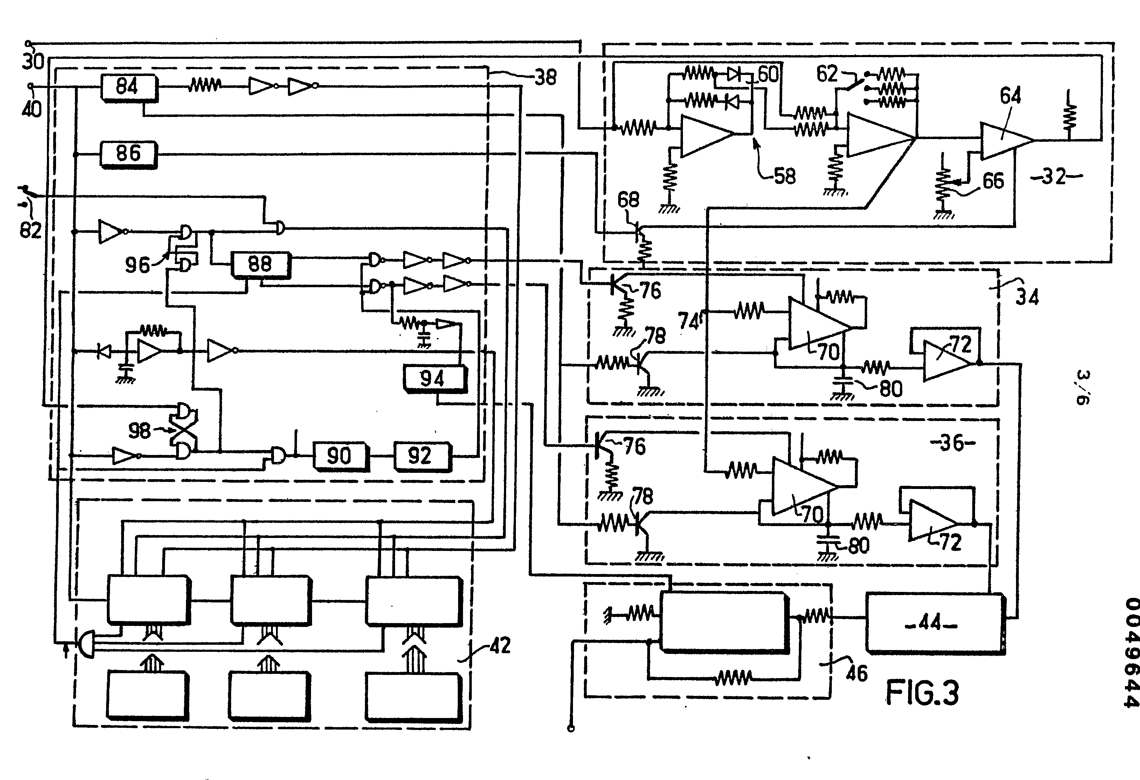

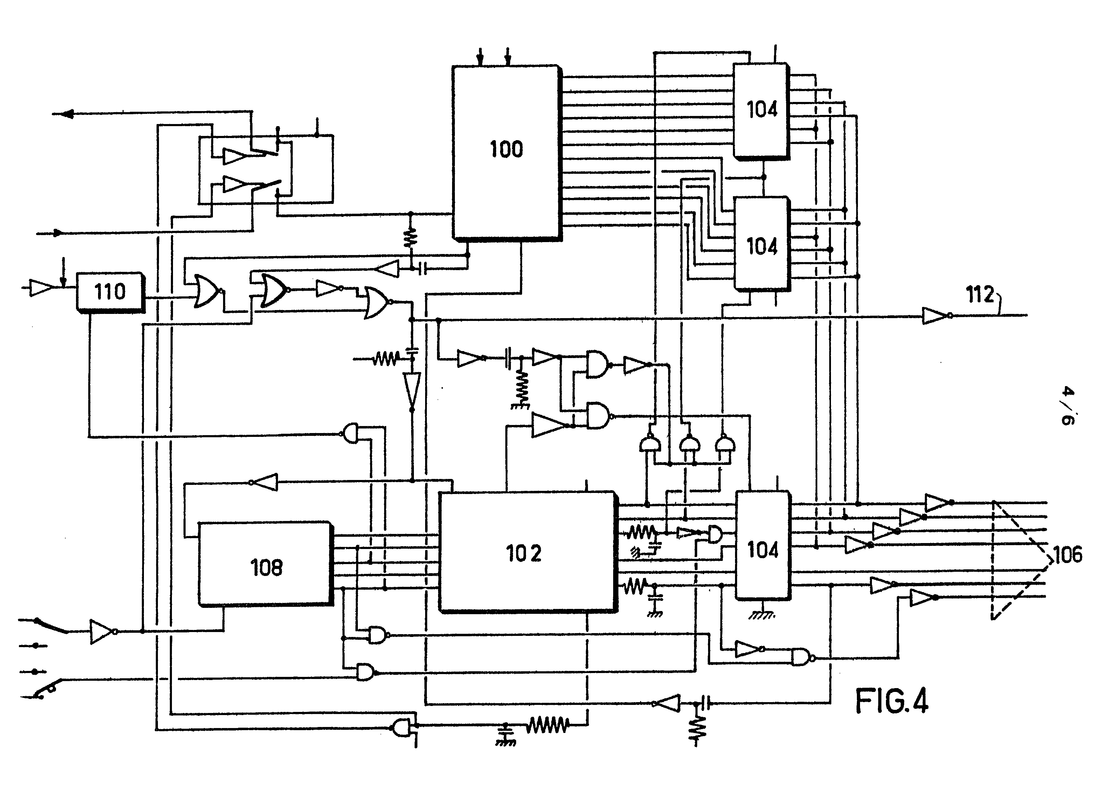

Le diagramme de la figure 2 est divisé par un trait horizontal interrompu qui correspond sensiblement à la séparation des circuits des figures 3 et 4. La partie qui se trouve au-dessus du trait interrompu sur la figure 2 et qui correspond à la figure 3 est essentiellement destinée à former une mesure analogique représentative du coefficient de réflexion. La partie inférieure de la figure 2 correspondant à la figure 4 est de type plus classique et est destinée à l'affichage des résultats.

L'appareil de la figure 2 reçoit un signal sismique brut, par exemple du type représenté sur la figure 1, par une borne 30 d'entrée qui alimente un circuit détecteur 32. Ce circuit détecteur, lorsqu'il reçoit le signal sismique, crée un signal de détection lorsqu'il détermine que le signal sismique a une valeur supérieure à une valeur de référence. Ce circuit détecteur assure aussi avantageusement un redressement et une amplification facilitant l'attaque des circuits 34 et 36 de mesure qui forment des signaux de mesure représentatifs de l'amplitude maximale du signal reçu. Il s'agit avantageusement de circuits détecteurs de pic.

La validation du fonctionnement des circuits 34 et 36 de mesure est assurée par un circuit 38 de commande d'échantillonnage, commandé par un signal extérieur de synchronisation arrivant à une borne 40. Un circuit 42 de comptage reçoit le signal de détection du circuit 32 et commence alors à compter. A la fin de sa période de comptage, il transmet un signal de fin de comptage, mis en oeuvre par le circuit 38 de commande d'échantillonnage.

Les valeurs déterminées par les circuits 34 et 36 parviennent à un circuit diviseur analogique 44 qui transmet le résultat correspondant au coefficient de réflexion à un circuit échantillonneur bloqueur 46, destiné à transmettre le signal de mesure analogique à l'autre partie de l'appareil.

La partie inférieure de la figure 2 représente un convertisseur analogique-numérique 48, associé à un afficheur numérique 50 qui présente le résultat sous forme numérique. Cependant, le convertisseur 48 peut aussi alimenter un circuit 52 de commande de cycle d'une imprimante 56 à laquelle le circuit 52 est relié par un circuit 54 de couplage adapté à la nature particulière de l'imprimante 56.

Sur la figure 3, les différents blocs représentés en traits interrompus correspondent aux blocs de la figure 2 qui portent les mêmes références.

La borne 30 est reliée à l'entrée du circuit détecteur 32. Celui-ci comporte un circuit classique 58 de redressement et d'amplification comprenant essentiellement deux amplificateurs opérationnels montés en série par l'intermédiaire d'un circuit redresseur à demi-alternance 60. Un commutateur 62 permet la sélection de la résistance de réaction du second amplificateur et, de cette manière, le réglage du gain d'amplification de l'ensemble du circuit 58. Le signal redressé et amplifié attaque une entrée d'un comparateur 64 dont l'autre entrée reçoit une tension de référence qui peut être réglée à l'aide d'un potentiomètre 66. Ce dernier permet la détermination du seuil au-delà duquel le signal sismique n'est plus considéré comme représentatif de bruit. Ce potentiomètre 66 permet un réglage qui dépend de la qualité du signal reçu. Le comparateur 64 ne transmet un signal que lorsque le signal amplifié et redressé dépasse la valeur de seuil, c'est-à-dire lorsque le comparateur détermine la présence de l'une des parties telle que 14, 16 ou 18 du signal sismique. Le signal du comparateur est transmis à une entrée du circuit 38 de commande d'échantillonnage. Une entrée de commande du comparateur 64 reçoit en outre, de ce même circuit 38 de commande, un signal de validation transmis par un transistor amplificateur 68.

Le signal sismique redressé et amplifié, présent à la sortie du circuit 58, est transmis à deux circuits 34 et 36 de mesure, sous forme de circuits détecteurs de pic. Chaque circuit 34, 36 comporte un circuit intégré 70 formant détecteur de pic, équivalant au montage série d'un comparateur et d'un transistor. Le signal de sortie parvient à un amplificateur 72. Les signaux reçus sont le signal sismique redressé et amplifié parvenant par le fil 74, un signal de commande d'échantillonnage provenant du circuit 38 de commande par l'intermédiaire de transistors 76, et un signal de commande de remise à zéro provenant aussi du circuit de commande par l'intermédiaire de transistors 78. Chaque circuit 34, 36 de mesure a un condensateur 80 à faible courant de fuite (condensateur au tantale). Lors du fonctionnement, le condensateur 80 se charge à une tension égale à l'amplitude de crête de l'onde sismique. Cette tension est maintenue grâce au faible courant de fuite et grâce à l'utilisation de l'amplificateur suiveur 72 dont l'impédance d'entrée est élevée. Les signaux de sortie des circuits de mesure 34 et 36 parviennent au circuit diviseur analogique 44.

Le circuit de commande 38 reçoit essentiellement un signal de synchronisation, par la borne 40, le signal de sortie du comparateur 64 du circuit détecteur 32, et éventuellement un signal provenant d'un commutateur 82 permettant l'utilisation de l'appareil en mode manuel ou automatique. Les éléments principaux du circuit 38 sont des multivibrateurs monostables 84, 86, 88, 90, 92 et 94 et des bascules 96 et 98.

Le circuit monostable 84 est destiné d'une part à commander le circuit 42 de comptage et d'autre part à transmettre des impulsions de remise à zéro aux circuits 34 et 36 de mesure. Le circuit monostable 86 transmet au comparateur 64 un signal de validation qui empêche le fonctionnement du comparateur au moment du passage de la partie du signal sismique qui correspond
à l'onde émise (méthode de comparaison) ou à l'onde émise et à l'onde directe (méthode des multiples).

Le circuit monostable 88 commande la transmission des signaux de validation de durée déterminée
aux circuits 34 et 36 de mesure afin que ceux-ci déterminent successivement l'amplitude de crête du signal
reçu. Cette durée du signal de validation des circuits
de mesure et l'intervalle de temps correspondant au
comptage par le circuit 42 (comme décrit dans la suite
du présent mémoire) sont commandés par les circuits monostables 90 et 92. Le circuit monostable 94 commande
la mémorisation du résultat de la division effectuée
dans le circuit 44 par le circuit échantillonneur bloqueur 46. La première bascule 96 reçoit aussi le signal
de synchronisation et commande les compteurs du circuit
42 de comptage. Le changement d'état de la bascule 98,
sous la commande du signal provenant du comparateur 64,
provoque aussi le basculement de la première bascule 96
et le déclenchement des fenêtres de fonctionnement des
circuits détecteurs de pic, comme décrit plus en détail
dans la suite du présent mémoire en référence au fonctionnement.

Le circuit 42 de comptage comporte trois compteurs réglables, montés en parallèle et destinés à délivrer un signal au multivibrateur monostable 88 à la fin
du décomptage, comme décrit en détail en référence au
fonctionnement de l'appareil.

La figure 4 représente plus en détail une portion de la partie inférieure de la figure 2. En effet,
il s'agit de la partie qui correspond au convertisseur
analogique-numérique 48, à l'afficheur 50, ainsi qu'à la
commande 52 et au circuit 54 de couplage d'imprimante.

Sur la figure 4, le convertisseur analogique-
numérique qui reçoit les signaux du circuit échantillonneur bloqueur est repéré par la référence 100. Le circuit comporte, comme autre élément essentiel, une mémoire programmable 102, par exemple un circuit intégré CD 6654. La commande des segments d'un afficheur numérique (non représenté) est assurée par trois circuits de commande 104, assurant aussi la transmission des données à la sortie 106 qui constitue l'entrée de l'imprimante. Le circuit comporte en outre un compteur 108 (par exemple un circuit de type CD 4024) et un circuit monostable 110. Les échanges entre le circuit de la figure 4 et l'imprimante s'effectuent, pour les données, par la sortie 106, correspondant au code ASCII, et pour les signaux de commande par diverses lignes représentées sur la figure et qui correspondent à des signaux d'acquittement (parvenant au multivibrateur 110), à des signaux d'échantillonnage (transmis par la ligne 112), à des signaux indiquant la validité des caractères, etc. On ne décrit pas en détail tous ces circuits et ces signaux car il s'agit d'un exemple d'imprimante bien connue, à savoir une imprimante NIP UP 1800 pilotée par un microprocesseur de la série 8041 A de "Intel".

Bien entendu, il existe de nombreux autres dispositifs d'affichage et des imprimantes donnant les résultats sous forme visuelle, imprimés ou non, à partir du signal analogique transmis par le circuit échantillonneur bloqueur 46.

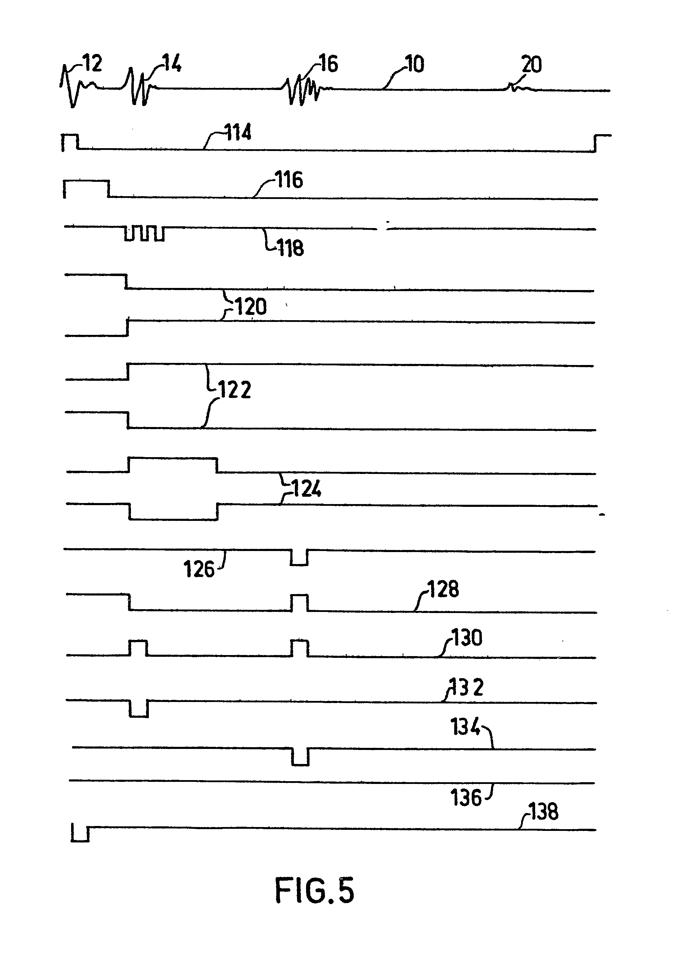

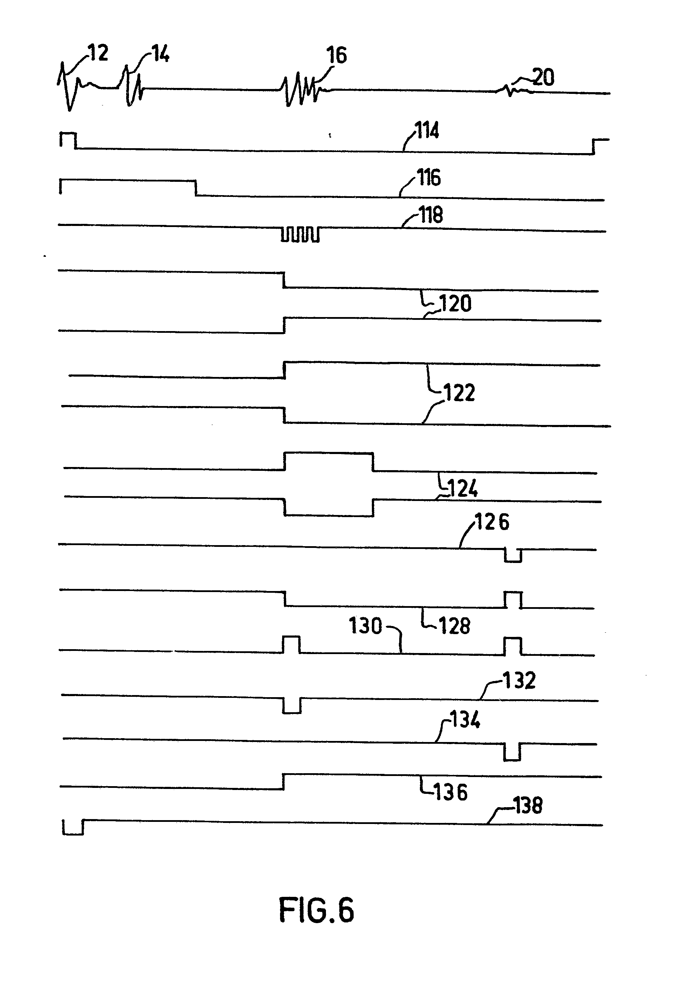

On considère maintenant le fonctionnement de l'appareil selon l'invention, utilisé dans le cadre d'une campagne de prospection sismique. Une source d'émission, par exemple un "somhar", émet des ondes sismiques, à une fréquence qui est comprise dans la plage allant de 200 à 5000 Hz. Un récepteur à hydrophone transmet des signaux à un amplificateur sommateur puis à un filtre qui délivre des signaux sismiques par exemple du type représenté sur la figure 1 et qui sont représentés aussi sur les figures 5 et 6.

Sur la figure 5 qui illustre le calcul du coef-

ficient de réflexion par mise en oeuvre de la méthode de comparaison, seule l'onde directe et l'onde réfléchie une fois, correspondant aux parties 14 et 16 du signal sismique, sont intéressantes. Lorsque l'onde sismique est émise, un signal 114 de synchronisation est formé et parvient à la borne 40 de l'appareil. Le multivibrateur 86, à partir de ce signal de synchronisation, commande une période d'inhibition afin que le comparateur ne soit validé qu'après un certain temps, comme indiqué par la forme d'onde 116. Le comparateur peut alors fonctionner et, lorsqu'il reçoit la partie 14 du signal sismique, il crée un signal représenté par la forme d'onde 118. Ce signal parvient aux bascules 98 et 96 successivement comme indiqué par les formes d'onde 120 et 122 respectivement. A ce moment, comme indiqué par les formes d'onde 128 et 130, le multivibrateur 92 commande la transmission au premier circuit de mesure 34 du signal 132 de validation. La forme d'onde 124 indique le signal transmis par le multivibrateur monostable 88. A la fin de la période de comptage du compteur, celui-ci transmet une impulsion comme indiqué par la référence 126. Le multivibrateur 92 transmet alors des impulsions indiquées par les formes d'onde 128 et 130, commandant le signal de validation du second circuit de mesure 36, comme indiqué par la forme d'onde 134. A ce moment, les deux mesures ont été réalisées. La forme d'onde 136 représente le signal de commande du fonctionnement des compteurs et la forme d'onde 138 la commande du chargement des compteurs.

La figure 6 est analogue à la figure 5 mais représente les différentes opérations exécutées lors du calcul du coefficient de réflexion par la méthode des multiples. Les références identiques à celles de la figure 5 désignent des formes d'onde analogues. La différence entre les figures 5 et 6 est simplement due au fait que le circuit monostable 86 inhibe le fonctionnement du comparateur 64 pendant une période nettement plus longue, jusqu'à un moment postérieur à la partie du signal sismique qui représente l'onde directe 14. De cette manière, la séquence décrite en référence à la figure 5 est exécutée non pas d'après les parties 14 et 16 du signal sismique, mais d'après les parties 16 et 20 correspondant respectivement à l'onde réfléchie une fois et à l'onde réfléchie deux fois sur le fond. Par ailleurs, le déroulement des opérations est le même.

En outre, grâce aux trois compteurs du circuit 42 et à la détection du moment de l'apparition de la partie intéressante du signal sismique par le comparateur 64, le circuit 38 de commande adapte automatiquement le moment d'émission des signaux de validation des circuits de mesure afin que l'appareil suive automatiquement, d'une mesure à l'autre, les variations progressives de profondeur de l'interface considérée.

L'appareil décrit précédemment ne permet, à un moment donné, que la détermination d'un seul coefficient de réflexion. L'appareil peut être modifié simplement afin qu'il permette la détermination soit du coefficient de réflexion de plusieurs miroirs, soit les coefficients d'un même miroir calculés suivant deux méthodes différentes. A cet effet, il suffit que l'appareil comporte le nombre nécessaire de circuits supplémentaires identiques aux circuits représentés sur la figure 3. A cet effet, il est avantageux que l'ensemble des circuits de la figure 3 soit réalisé sur une carte enfichable.

L'appareil du type décrit précédemment a été utilisé dans une campagne de prospection sismique et on a pu constater la très grande reproductibilité des résultats obtenus. L'appareil s'est révélé efficace pour des fonds couverts par la mer jusqu'à des hauteurs de 300 à 400 m. Les résultats obtenus ont montré que l'appareil était fidèle et fiable et que les résultats pouvaient être facilement corrélés et comparés aux autres

16.

résultats de prospection sismique.

Bien qu'on ait décrit un appareil dans lequel les opérations essentielles sont exécutées par des circuits de type analogique, il est bien entendu que toutes ces opérations peuvent être effectuées numériquement. Les techniques et les composants numériques sont actuellement facilement disponibles, à un faible coût. Il suffit que les signaux soient mis sous forme numérique avant le traitement. Les différentes fonctions de commande sont alors remplies par un microprocesseur convenablement programmé.

L'appareil a été décrit dans le présent mémoire en référence à la détermination du coefficient de réflexion de couches de sédiments, car ces données sont très utiles pour la détermination des propriétés des fonds marins peu profonds, étudiés avant l'exécution de travaux marins tels que la pose de câbles ou la construction d'installations portuaires. L'appareil convient cependant aux techniques de sismique réflexion continue monotrace utilisées couramment dans le domaine de la prospection pétrolière. Les distances envisagées sont alors beaucoup plus grandes si bien que les fréquences des mesures sont bien plus réduites. Cependant, l'appareil selon l'invention peut aussi être utilisé par simple adaptation aux fréquences d'utilisation, essentiellement par modification des périodes des différents multivibrateurs monostables et des compteurs.

Il est bien entendu que l'invention n'a été décrite et représentée qu'à titre d'exemple préférentiel et qu'on pourra apporter toute équivalence technique dans ses éléments constitutifs sans pour autant sortir de son cadre.

REVENDICATIONS

1. Appareil automatique de détermination continue et en temps réel du coefficient de réflexion d'une ou plusieurs interfaces à partir d'un signal sismique comprenant au moins deux parties représentatives d'ondes sismiques dont l'une au moins a subi au moins une réflexion à une interface,

ledit appareil étant caractérisé en ce qu'il comprend :

- un circuit détecteur (32) destiné à recevoir le signal sismique et à créer un signal de détection lorsqu'il détermine l'arrivée d'une première partie de signal sismique représentative d'une onde sismique,

- un circuit de comptage (42) commandé par le signal de détection et destiné à former un signal de fin de comptage après un intervalle de temps prédéterminé,

- un circuit (38) de validation de mesure commandé successivement par le signal de détection et par le signal de comptage et destiné, à chaque fois, à créer un signal de validation de durée déterminée, inférieure audit intervalle de temps prédéterminé,

- un circuit de mesure (34, 36) commandé par le signal de validation et destiné à former des signaux de mesure représentatifs chacun de l'amplitude maximale du signal reçu pendant la durée du signal correspondant de validation, et

- un circuit de calcul (44) destiné à recevoir les signaux de mesure et à les traiter afin qu'il détermine une valeur représentative d'un coefficient de réflexion.

2. Appareil selon la revendication 1, caractérisé en ce que le circuit de comptage (42) comporte en outre un dispositif de réglage de l'intervalle de temps prédéterminé.

3. Appareil selon l'une des revendications 1 et 2, caractérisé en ce que le circuit (38) de validation de mesure comporte en outre un dispositif de réglage de la durée déterminée du signal de validation.

4. Appareil selon l'une quelconque des revendications 1 à 3, caractérisé en ce qu'il comporte en outre une mémoire destinée à conserver les signaux de mesure.

5. Appareil selon l'une quelconque des revendications précédentes, caractérisé en ce qu'il comprend en outre un circuit (86) de commande d'échantillonnage, commandé par un signal extérieur de synchronisation (40) et destiné à valider le fonctionnement du circuit détecteur (32).

6. Appareil selon l'une quelconque des revendications précédentes, caractérisé en ce que le circuit détecteur (32) comporte un comparateur (64) qui crée le signal de détection lorsqu'il détermine que le signal sismique dépasse un seuil prédéterminé.

7. Appareil selon l'une quelconque des revendications précédentes, caractérisé en ce que le circuit de mesure (34, 36) comporte deux circuits (70) détecteurs de pic commandés l'un par un premier signal de validation et l'autre par un second signal de validation.

8. Appareil selon l'une quelconque des revendications précédentes, caractérisé en ce qu'il comporte en outre un circuit d'affichage (50) de valeurs représentatives des coefficients de réflexion.

9. Appareil selon l'une quelconque des revendications précédentes, caractérisé en ce que ladite première partie du signal sismique correspond à une onde sismique directe, et une seconde partie du signal sismique correspond à une onde réfléchie une seule fois par une interface.

10. Appareil selon l'une quelconque des re-

0049644

19.

vendications 1 à 8, caractérisé en ce que ladite première partie de signal sismique est représentative d'une onde sismique qui a subi une seule réflexion sur une interface, et une seconde partie de signal sismique est représentative d'une onde ayant subi des réflexions multiples.

11. Appareil selon l'une quelconque des revendications précédentes, caractérisé en ce qu'il comporte plusieurs circuits de comptage (42), plusieurs circuits (38) de validation de mesure et plusieurs circuits de mesure (34, 36) destinés à permettre la détermination par l'appareil de plusieurs coefficients de réflexion, correspondant soit à plusieurs interfaces, soit à une même interface mais par mise en oeuvre de méthodes différentes de calcul.

FIG.1

FIG.2

FIG.3

3/6

0049644

FIG.4

FIG.5

FIG.6

**0049644**

Office européen
des brevets

**RAPPORT DE RECHERCHE EUROPEENNE**

Numéro de la demande

EP 81 40 0033

| Catégorie | Citation du document avec indication, en cas de besoin, des parties pertinentes | Revendica-tion concernée |
|---|---|---|
| | FR - A - 1 325 968 (W. LIBEN)<br><br>* page 3, colonne 1, ligne 5 - colonne 2, ligne 38; page 5, colonne 2, ligne 38 - page 6, colonne 1, ligne 10; page 6, colonne 1, ligne 23 - colonne 2, ligne 28; résumé; figures 4,5 *<br><br>-- | 1,9,11 |
| | FR - A - 2 172 808 (INST. FR. DU PETROLE)<br><br>* page 7, ligne 11 - page 8, ligne 14; page 11, ligne 29 - page 12, ligne 33 *<br><br>-- | 1,10, 11 |
| A | FR - A - 2 209 112 (BOLT, BERANEK)<br><br>* revendications 1,17,19,22-24; figure 1 *<br><br>-- | 1 |
| A | US - A - 3 246 720 (A.L. PARACK et al.)<br><br>* colonne 1, lignes 41-53; colonne 3, ligne 63 - colonne 4, ligne 9 *<br><br>-- | 1 |
| A | US - A - 3 346 067 (M.R. SCHROEDER)<br><br>* colonne 1, ligne 64 - colonne 2, ligne 14; revendications 1,6 *<br><br>-------- | 1 |

**DOCUMENTS CONSIDERES COMME PERTINENTS**

**CLASSEMENT DE LA DEMANDE (Int. Cl³)**

G 01 V 1/30
G 01 N 29/00
G 01 S 15/02

**DOMAINES TECHNIQUES RECHERCHES (Int. Cl³)**

G 01 V 1
G 01 N 29
G 01 S 15

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 01.09.1981 | HAASBROEK |

OEB Form 1503.1  06.78